# EUROPEAN PATENT APPLICATION

(11) **EP 4 818 617 A1**
(43) Date of publication of application: **07.10.2026**
(21) Application number: 24898159.9
(22) Date of filing: 28.11.2024
(51) Int. Cl.: F26B 23/00, F26B 21/10, B09B 3/40, B01D 53/26, B09B 3/38, B09B 3/35, B01D 5/00, B09B 101/70

(54) **FOOD WASTE DISPOSER AND FOOD WASTE PROCESSING METHOD**

(30) Priority: 28.11.2023 KR 20230168225; 18.03.2024 KR 20240037044
(71) Applicant: Lee, Seonghwa, Seoul 05849 (KR)
(72) Inventor: LEE, Kyul-Joo, Dangjin-si, Chungcheongnam-do 31743 (KR)
(74) Representative: Maiwald GmbH
(86) International application number: PCT/KR2024/019143
(87) International publication number: WO 2025/116565

(57) **Abstract**

The present invention provides a food waste disposer and a food waste processing method. The food waste disposer according to the present invention comprises: a drying furnace into which food waste is introduced, and then heated/ processed; a gas flow pipe through which a gas flows to the drying furnace; and a pressure control unit connected to the gas flow pipe and provided with a pressure control space, the size of which is varied by the inflow and outflow of the gas.

## Description

### Technical Field

The present disclosure relates to a food waste disposer and a food waste processing method.

### Background Art

A food waste disposer disposes food waste by heating and drying food waste to remove moisture therefrom and reduce a volume thereof.

In disposing such food waste, the food waste is heated in a drying oven, and to prevent an increase in pressure caused by gas generated during such a heating process, the gas therefrom is discharged externally.

When gas is discharged externally, the gas is filtered to remove odors, but as all odors may not be effectively removed, an unpleasant odor may emanate from the vicinity of the food waste disposer.

### Summary of Invention

### Technical Problem

The present disclosure was devised to solve the above-described problems, and an aspect of the present disclosure is to provide a food waste disposer and a food waste processing method of processing food waste without discharging gas.

### Solution to Problem

According to the present disclosure, a food waste disposer includes a drying oven into which food waste is introduced and heat treated; a gas flow pipe connected to the drying oven, and through which gas from the drying oven flows; and a pressure regulating unit connected to the gas flow pipe, and having a pressure regulating space, a size of which is varied by inflow and outflow of the gas.

As an example, the pressure regulating unit may be formed to have a foldable structure.

As another example, the pressure regulating unit may be formed of a flexible material.

The pressure regulating unit includes a pressure regulating cylinder, one side of which is connected to the gas flow pipe and the other side of which is open; and a movable partition wall disposed within the pressure regulating cylinder to form the pressure regulating space between the movable partition wall and one side of the pressure regulating cylinder, wherein, due to pressure of the gas within the pressure regulating space, the movable partition wall may move to the one side or the other side of the pressure regulating cylinder, thereby adjusting the size of the pressure regulating space.

In the present disclosure, the food waste disposer may further include a gas circulation pipe connected to the drying oven, and through which gas discharged from the drying oven is circulated, wherein the gas circulation pipe may be directly connected to the drying oven, or may be connected to the drying oven through the gas circulation pipe.

Meanwhile, the pressure regulating unit may be a water tank connected to a lower portion of the gas circulation pipe.

In the present disclosure, the food waste disposer may further include a water tank connected to the lower portion of the gas circulation pipe; and a cooling unit for cooling the gas to remove moisture from the gas circulating in the gas circulation pipe.

The cooling unit may include a condenser for condensing a refrigerant; and a cooling pipe connected to the condenser through which the refrigerant flows, and disposed to penetrate the gas circulation pipe.

The gas circulation pipe has a spiral circulation portion, and the cooling unit may be a cooling fan for air cooling the spiral circulation portion.

The gas circulation pipe has a link portion connected to the water tank, and the lower portion of the gas circulation pipe may be formed to be inclined downwardly toward the link portion.

The gas circulation pipe may have a first link portion connected to one side of the water tank and a second link portion connected to the other side of the water tank.

The gas circulation pipe has the gas inflow end into which the gas from the drying oven is introduced and the gas outflow end through which the gas outflows back into the drying oven, and the gas outflow end may be disposed lower than the gas inflow end within the drying oven.

In the present disclosure, the food waste disposer may further include a grinding cutter and a stirring blade disposed within the drying oven; a driving motor for rotating the grinding cutter and the stirring blade; a cutter connection unit connecting the grinding cutter and the driving motor; and a blade connection unit connecting the stirring blade and the driving motor, wherein the rotary cutter shaft of the cutter connection unit may be disposed to penetrate a rotary blade shaft of the blade connection unit, so that the rotary cutter shaft and the rotary blade shaft may be formed as a dual-axis structure in which the two shafts rotate independently of each other.

The rotary cutter shaft and the rotary blade shaft may rotate in opposite directions.

The cutter connection unit includes the rotary cutter shaft connected to the grinding cutter, and the rotary cutter shaft may be connected to a motor shaft of the driving motor, and the blade connection unit may include the rotary blade shaft connected to the stirring blade, wherein a driven gear may be formed on the rotary blade shaft, and the driven gear may be geared with a driving gear formed on the motor shaft.

The driven gear may be formed larger than the driving gear so that the stirring blade rotates at a lower speed than the grinding cutter.

The driving motor may be disposed in a lateral direction of the drying oven and may be disposed in a vertical direction.

The cutter connection unit may further include a driving belt connecting the rotary cutter shaft and the motor shaft.

The grinding cutter may include a plurality of shelves installed to be spaced apart from each other on the rotary cutter shaft in the vertical direction; and a plurality of cutting members installed to be spaced apart from each other along the edges on each of the plurality of shelves.

Each of the cutting member and the stirring blade may be curved in a rotational direction.

The rotary cutter shaft and the rotary blade shaft may rotate in opposite directions, and the cutting member and the stirring blade may be curved in opposite directions.

According to another aspect of the present disclosure, a food waste processing method may be provided, the food waste processing method including: a heating operation of heat treating food waste introduced into a drying oven; a cooling operation of cooling the food waste after the heat-treatment of the food waste is completed; and a pressure regulating operation in which, while the heating operation and the cooling operation are being performed with the external discharge of gas blocked, a size of a pressure regulating space of a pressure regulating unit connected to the drying oven is varied by inflow of the gas into and outflow of the gas from the pressure regulating space.

The pressure regulating operation may include: a first pressure regulating operation in which the size of the pressure regulating space increases when the gas is introduced from the drying oven to the pressure regulating unit during the heating operation; and a second pressure regulating operation in which the size of the pressure regulating space decreases when the gas is discharged from the pressure regulating unit to the drying oven during the cooling operation.

### Advantageous Effects of Invention

As set forth above, in the present disclosure, by configuring a pressure regulating unit in which a size of a pressure regulating space is varied by inflow and outflow of gas, pressure in a drying oven may be maintained within a stable range without discharging odorous gas from the drying oven externally.

Furthermore, in the present disclosure, the internal pressure of the drying oven may be automatically regulated by the pressure regulating unit, rather than by separate members such as measuring sensors and opening/closing valves, problems such as failure of the separate members may be avoided.

### Brief Description of Drawings

FIG. 1 is a drawing illustrating a food waste disposer according to a first embodiment of the present disclosure.
FIG. 2 is a drawing illustrating a food waste disposer according to a second embodiment of the present disclosure.
FIG. 3 is a drawing illustrating a food waste disposer according to a third embodiment of the present disclosure.
FIG. 4 is a drawing illustrating a food waste disposer according to a fourth embodiment of the present disclosure.
FIG. 5 is a drawing illustrating a food waste disposer according to a fifth embodiment of the present disclosure.
FIG. 6 is a drawing illustrating a food waste disposer according to a sixth embodiment of the present disclosure.
FIG. 7 is a drawing illustrating the configurations for rotating a grinding cutter and a stirring blade in the food waste disposer of FIG. 6.
FIG. 8 is a plan view illustrating the food waste disposer of FIG. 7.
FIG. 9 is a drawing illustrating a dual-axis structure of a rotary cutter shaft and a rotary blade shaft in the food waste disposer of FIG. 7.

### Mode for Invention

Hereinafter, preferred embodiments of the present disclosure will be described in detail so that those skilled in the art could easily practice the present disclosure with reference to the accompanying drawings. However, in describing a preferred embodiment of the present disclosure in detail, if it is determined that a detailed description of a related known function or configuration may unnecessarily obscure the subject matter of the present disclosure, the detailed description will be omitted. In addition, the same reference numerals are used throughout the drawings for parts having similar functions and actions. In addition, in the present specification, terms such as 'upper,' 'upper portion,' 'upper surface,' 'lower,' 'lower portion,' 'lower surface,' 'side surface,' and the like are based on the drawings, and in practice, it may be different depending on a direction in which the components are disposed.

In addition, throughout the specification, when a part is said to be 'connected' to another part, this is not only when it is 'directly connected,' but also when it is 'indirectly connected' with other components therebetween. In addition, 'including' a certain component means that other components may be further included without excluding other components unless otherwise stated.

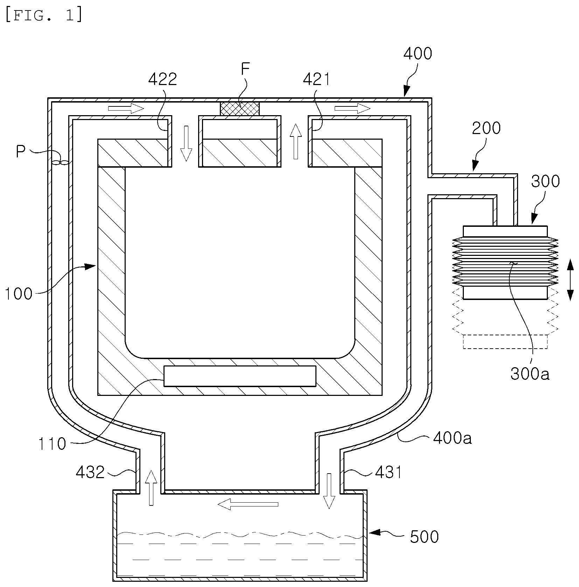

FIGS. 1 to 5 are drawings illustrating a food waste disposer according to first to fifth embodiments of the present disclosure.

Referring to FIGS. 1 to 5, the food waste disposer according to the first to fifth embodiments of the present disclosure includes a drying oven 100, a gas flow pipe 200, and a pressure regulating unit 300.

The drying oven 100 is a receiving member into which food waste is introduced and heat treated.

Specifically, the drying oven 100 has an internal space of a certain size so that a certain amount of food waste may be accommodated.

The drying oven 100 may have a rotating member (not shown) disposed therein to perform stirring or grinding operations on food waste. In this case, the rotating member only needs to be configured to stir or grind food waste, and is not limited by the present disclosure.

In addition, a heater 110 is installed in the drying oven 100 so that drying may be performed simultaneously, during the process of grinding and stirring food waste.

Such a drying oven 100 only needs to be configured so that heat treatment of food waste is performed stably, and a specific structure thereof is not limited by the present disclosure.

In addition, the gas flow pipe 200 is connected to the drying oven 100, and is a pipe through which gas from the drying oven 100 flows.

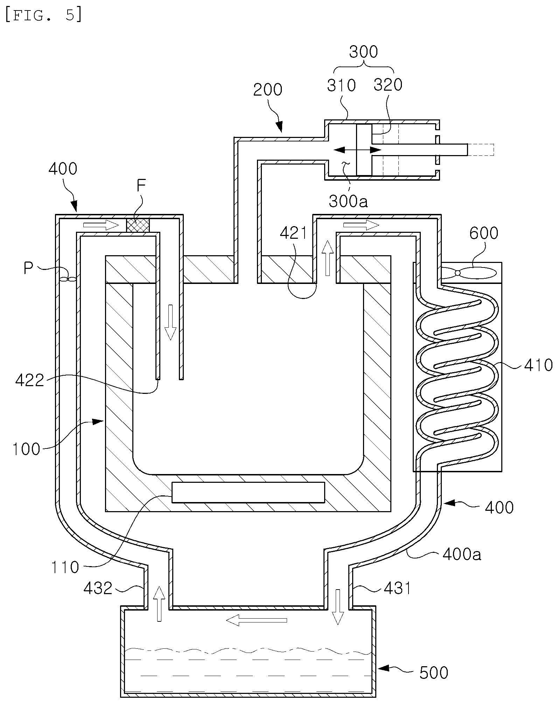

The gas flow pipe 200 may be connected to a drying oven 100 through a gas circulation pipe 400 as in the first to fourth embodiments illustrated in FIGS. 1 to 4, or may be directly connected to the drying oven 100 as in the fifth embodiment illustrated in FIG. 5.

A pressure regulating unit 300 is connected to the gas flow pipe 200, so that gas from the drying oven 100 may be introduced into the pressure regulating unit 300 through the gas flow pipe 200.

The pressure regulating unit 300 regulates the pressure within the drying oven 100 with the gas in the drying oven 100 from being discharged outside the food waste disposer.

During the process of heating and drying food waste in the drying oven 100, gas is generated from the food waste, and due to this gas, the internal pressure in the drying oven 100 increases.

A food waste disposer according to the prior art is configured to discharge gas externally to reduce high internal pressure. In addition, the gas is filtered with a filter to remove odors from the gas discharged externally, but there is a problem in that the odors may not be effectively removed due to the performance limitations of the filter and frequent replacement cycles.

To overcome such problems, the food waste disposer according to the present disclosure has a pressure regulating unit 300 connected to a drying oven 100.

The pressure regulating unit 300 is connected to the drying oven 100 by a gas flow pipe 200, and in this case, the gas flow pipe 200 may be directly connected to the drying oven 100 or be connected to the drying oven 100 through a gas circulation pipe 400.

Such a pressure regulating unit 300 has a pressure regulating space 300a, a size of which is varied by inflow and outflow of gas. That is, the pressure regulating unit 300 may have a pressure regulating space 300a that can expand and contract by the inflow and outflow of gas.

In other words, the pressure regulating unit 300 has a pressure regulating space 300a formed therein, and the pressure regulating space 300a may have a structure that can expand and contract so that gas generating high pressure within the drying oven 100 may be introduced into and then discharged.

In the process of heating and drying food waste in the drying oven 100, an internal temperature of the drying oven 100 increases and gas is generated, so internal pressure thereof increases. Accordingly, the pressure regulating space 300a of the pressure regulating unit 300 is expanded by introducing a certain amount of gas discharged from the drying oven 100 through the gas flow pipe 200. As a result, the pressure regulating unit 300 may prevent the internal pressure of the drying oven 100 from increasing.

After the heating and drying process of food waste in the drying oven 100 is completed, the internal temperature of the drying oven 100 is reduced and moisture of the gas is collected in the water tank 500, so the internal pressure of the drying oven 100 is reduced. Accordingly, the pressure regulating space 300a of the pressure regulating unit 300 is contracted by discharging a certain amount of gas accommodated therein toward the drying oven 100 through the gas flow pipe 200. As a result, the pressure regulating unit 300 may prevent the internal pressure of the drying oven 100 from decreasing.

As described above, in the present disclosure, the internal pressure of the drying oven 100 may be automatically regulated by a pressure regulating unit 300 having a pressure regulating space 300a that expands and contracts due to the inflow and outflow of the gas, rather than by separate members such as a measuring sensor and an opening/closing valve. As a result, the present disclosure may be free from problems such as failure of the members such as a measurement sensor and a value, and the like.

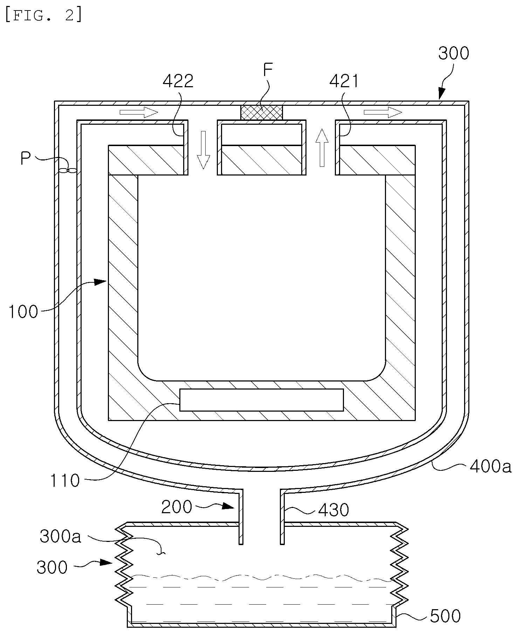

As an example, as illustrated in FIGS. 2 to 4, the pressure regulating unit 300 may be formed to have a foldable structure so that a size of the pressure regulating space 300a is variable.

As described above, the pressure regulating unit 300 may have a structure in which at least a portion thereof may be folded and overlapped, that is, a structure in which a volume of the pressure regulating space 300a increases as it is unfolded and the volume of the pressure regulating space 300a decreases as it is folded.

As another example, although not illustrated in the drawing, the pressure regulating unit 300 may be formed of a flexible material so that the size of the pressure regulating space 300a is variable.

That is, the pressure regulating unit 300 may be formed of a flexible material, such as a rubber material like a balloon.

As another example, as illustrated in FIG. 5, the pressure regulating unit 300 may include a pressure regulating cylinder 310 and a movable partition wall 320.

The pressure regulating cylinder 310 may have a structure in which one side thereof is connected to the gas flow pipe 200 and the other side thereof is open. In addition, a movable partition wall 320 may be disposed within the pressure regulating cylinder 310 to form a pressure regulating space 300a between the movable partition wall 320 and one side of the pressure regulating cylinder 310.

That is, the movable partition wall 320 is disposed inside the pressure regulating cylinder 310 so that a pressure regulating space 300a is formed inside the pressure regulating cylinder 310, thereby preventing the gas introduced into the pressure regulating space 300a through the gas flow pipe 200 from being discharged externally of the pressure regulating cylinder 310.

Such a movable partition wall 320 may move to one side or the other side of the pressure regulating cylinder 310 by pressure of the gas within the pressure regulating space 300a, and accordingly, the size of the pressure regulating space 300a is adjusted.

When gas is introduced into the pressure regulating space 300a, as the pressure of the gas within the pressure regulating space 300a increases, the movable partition wall 320 moves to the other side of the pressure regulating cylinder 310, and as a result, the size of the pressure regulating space 300a decreases.

Conversely, when gas is discharged from the pressure regulating space 300a, the pressure of the gas within the pressure regulating space 300a decreases, and the movable partition wall 320 moves to one side of the pressure regulating cylinder 310, and as a result, the size of the pressure regulating space 300a increases.

Meanwhile, in the present disclosure, the food waste disposer may further include a gas circulation pipe 400.

The gas circulation pipe 400 is connected to a drying oven 100, and has a structure through which gas discharged from the drying oven 100 is circulated.

Such a gas circulation pipe 400 may be equipped with a circulation fan P for circulating gas inside and a filter F for filtering the gas.

Such a gas circulation pipe 400 may take the form of a pipe or a tube, and may be configured to allow the gas discharged from the drying oven 100 to circulate smoothly, and a specific structure thereof is not limited by the present disclosure.

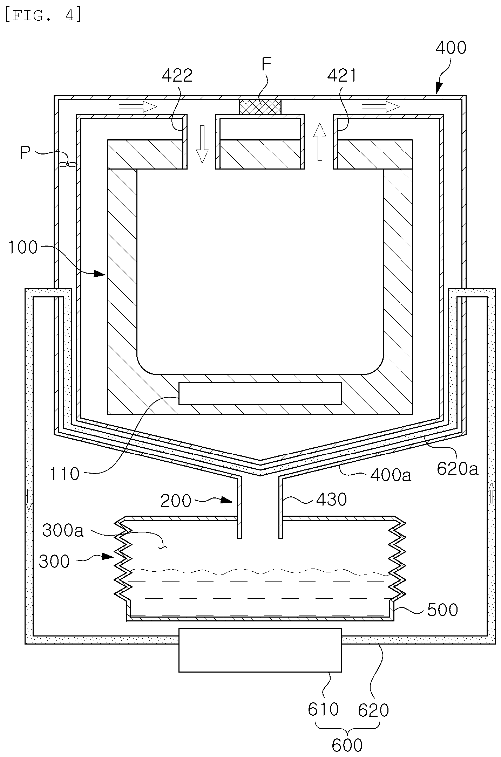

As illustrated in FIGS. 2 and 4, the food waste disposer according to the second and fourth embodiments of the present disclosure may be a water tank 500 in which a pressure regulating unit 300 is connected to a lower portion 400a of a gas circulation pipe 400.

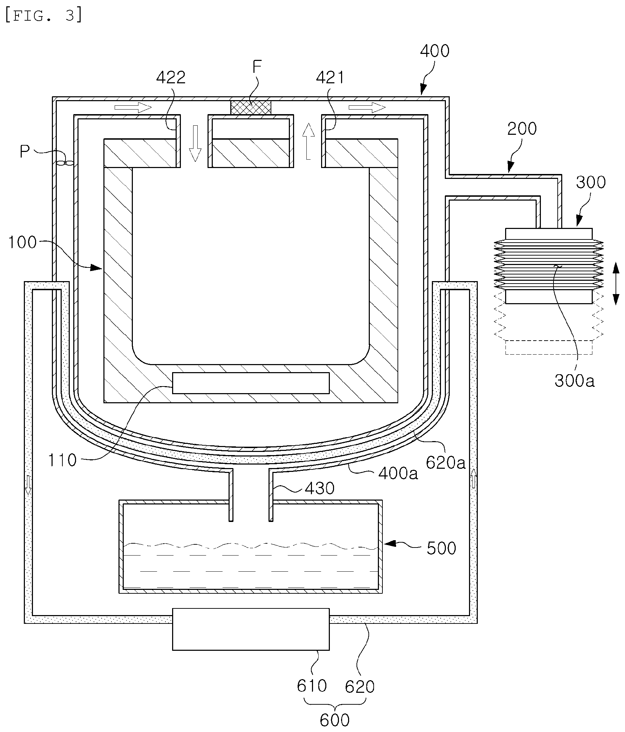

As illustrated in FIGS. 1 and 3, the food waste disposer according to the first, third, and fifth embodiments of the present disclosure may have a pressure regulating unit 300, configured separately from the water tank 500. Alternatively, in the food waste disposer according to the second and fourth embodiments of the present disclosure, as illustrated in FIGS. 2 and 4, the water tank 500 collecting moisture included in the gas may be utilized as the pressure regulating unit 300.

That is, the water tank 500 illustrated in FIGS. 2 and 4 may become a pressure regulating unit 300 by having a foldable structure so that the size of the pressure regulating space 300a, an internal space thereof, is variable, and thus may perform the original role of collecting moisture contained in the gas, as well as the role of regulating the internal pressure of the drying oven 100 by allowing gas to be introduced thereinto and discharged therefrom.

Furthermore, in the present disclosure, the food waste disposer may further include a cooling unit 600, together with the water tank 500 connected to the lower portion 400a of the gas circulation pipe 400.

That is, according to the third to fifth embodiments illustrated in FIGS. 3 to 5, in the present disclosure, the food waste disposer may further include a cooling unit 600 for cooling gas circulating in the gas circulation pipe 400.

The cooling unit 600 performs the function of cooling the gas circulating in the gas circulation pipe 400 to liquefy moisture contained in the gas. Water formed by the liquefaction of moisture as described above flows into and is accommodated in the water tank 500.

As an example, according to the third and fourth embodiments of the present disclosure illustrated in FIGS. 3 and 4, the cooling unit 600 may include a condenser 610 and a cooling pipe 620.

The condenser 610 condenses a refrigerant, and here, any conventional condensation configuration may be utilized, as a specific configuration thereof is not limited by the present disclosure.

In addition, the cooling pipe 620 is connected to the condenser 610 so that the refrigerant, condensed from the condenser 610 flows, and is installed in the gas circulation pipe 400 to cool the gas in the gas circulation pipe 400.

More specifically, the cooling pipe 620 may be disposed through the gas circulation pipe 400.

As described above, by having a structure in which the cooling pipe 620 is disposed inside the gas circulation pipe 400 over a portion of the section, the gas circulating in the gas circulation pipe 400 is directly cooled, thereby increasing the cooling performance of the gas and increasing the drying efficiency of the food waste.

As another example, according to the fifth embodiment of the present disclosure, illustrated in FIG. 5, the cooling unit 600 may be a cooling fan.

Specifically, the gas circulation pipe 400 may have a spiral circulation portion 410, and the cooling unit 600 may be a cooling fan for air cooling the spiral circulation portion 410.

Meanwhile, the gas circulation pipe 400 may have the following structure to increase the drying efficiency of food waste.

First, the gas circulation pipe 400 is formed to have a link portion 430 connected to the water tank 500, wherein a lower portion 400a of the gas circulation pipe 400 may be formed to be inclined downwardly toward the link portion 430.

Specifically, the lower portion 400a of the gas circulation pipe 400 may be formed in a curved shape as illustrated in FIGS. 1 to 3 as an example, or in a straight inclined structure as illustrated in FIG. 4 as another example. In this case, as illustrated in FIGS. 3 and 4, a portion 620a of a cooling pipe 620 disposed inside the lower portion 400a of the gas circulation pipe 400 may be formed in a shape corresponding to the shape of the gas circulation pipe 400.

When the lower portion of the gas circulation pipe is formed horizontally, water generated by liquefaction within the gas circulation pipe may accumulate without moving into the water tank.

In contrast, the present disclosure may have a structure in which the lower portion 400a of the gas circulation pipe 400 is inclined downwardly toward the link portion 430. In this case, the water generated by liquefaction within the gas circulation pipe 400 may move smoothly to the water tank 500 without accumulating in the gas circulation pipe 400.

Furthermore, as another example, the gas circulation pipe 400 may have a first link portion 431 and a second link portion 432, spaced apart from each other, as illustrated in FIGS. 1 and 5.

The first link portion 431 may be connected to one side of the water tank 500, and the second link portion 432 may be connected to the other side of the water tank 500. As described above, the first link portion 431 and the second link portion 432 are far apart from each other, so that gas circulating in the gas circulation pipe 400 may pass through the inside of the water tank 500, thereby increasing a drying rate of the gas.

In addition, the gas circulation pipe 400 may have a gas inflow end 421 into which gas generated in the drying oven 100 is introduced, and a gas outflow end 422 through which the introduced gas is circulated and then outflows back into the drying oven 100.

Here, the gas inflow end 421 may be formed on one side of an upper portion of the drying oven 100, the gas outflow end 422 may be formed on the other side of the upper portion of the drying oven 100.

As an example, as illustrated in FIG. 5, the gas outflow end 422 may be disposed lower than the gas inflow end 421 within the drying oven. Accordingly, the gas discharged through the gas outflow end 422 and introduced into the drying oven 100 may push other gases (high in moisture) or moisture inside the drying oven 100 toward the gas inflow end 421. In other words, by disposing the gas outflow end 422 lower than the gas inflow end 421, the drying efficiency for food waste in the drying oven 100 be increased.

A food waste processing method by the food waste disposer configured as described above is as follows.

The food waste processing method may include a heating operation, a cooling operation, and a pressure control operation.

First, the heating operation is an operation of heating and treating food waste introduced into the drying oven 100.

The cooling operation is an operation of cooling the food waste after the heat-treatment of food waste is completed.

Meanwhile, the pressure regulating operation may be performed, while the heating operation and the cooling operation are being performed, with external discharge of the gas blocked.

Such a pressure regulating operation is an operation in which a size of a pressure regulating space 300a of the pressure regulating unit 300 connected to the drying oven 100 is varied by inflow of the gas into and outflow of the gas from the pressure regulating space 300a.

Specifically, the pressure regulating operation may include a first pressure regulating operation and a second pressure regulating operation.

The first pressure regulating operation is an operation in which the size of the pressure regulating space 300a increases when gas is introduced from the drying oven 100 to the pressure regulating unit 300 during the heating operation, thereby allowing the internal pressure of the drying oven 100 to be regulated so that it does not become much higher than atmospheric pressure.

In addition, the second pressure regulating operation is an operation in which the size of the pressure regulating space 300a decreases when gas outflows from the pressure regulating unit 300 to the drying oven 100 during the cooling operation, thereby allowing the internal pressure of the drying oven 100 to be regulated so that it is not much lower than atmospheric pressure.

Consequently, in the present disclosure, by configuring a pressure regulating unit 300 in which the size of the pressure regulating space 300a is varied by the inflow and outflow of the gas, the pressure within the drying oven 100 may be maintained within a stable range without discharging odorous gas externally from the drying oven 100.

Furthermore, in the present disclosure, the internal pressure of the drying oven 100 is not regulated by separate members such as a measuring sensor and an opening/closing valve, but is automatically regulated by the pressure regulating unit 300, thereby being free from problems such as failure of the separate members.

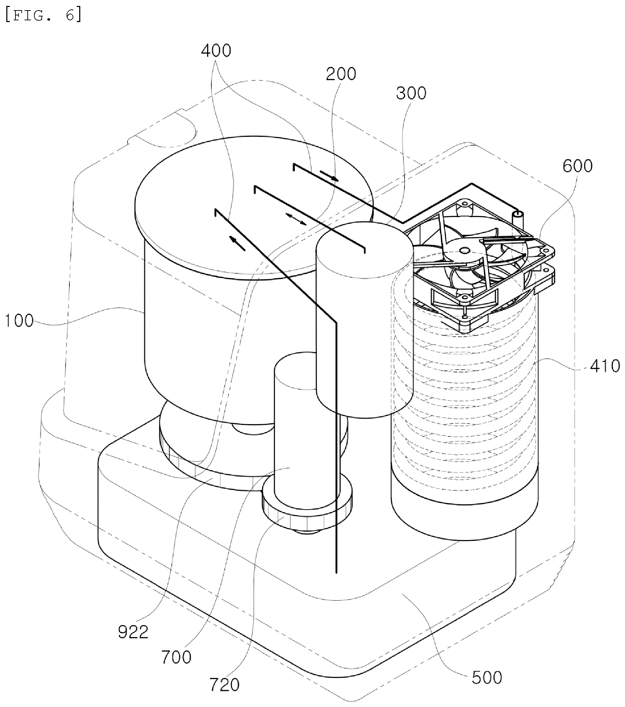

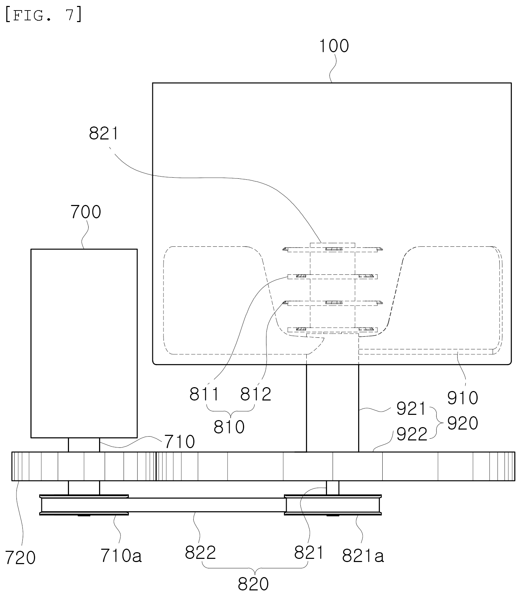

FIG. 6 is a drawing illustrating a food waste disposer according to a sixth embodiment of the present disclosure, and FIG. 7 is a drawing illustrating the configurations for rotating a grinding cutter and a stirring blade in the food waste disposer of FIG. 6.

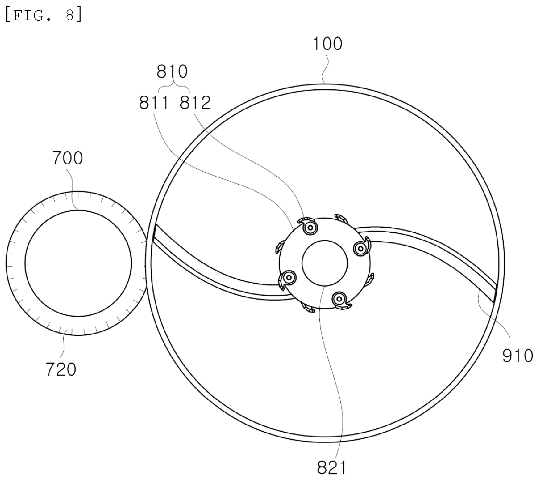

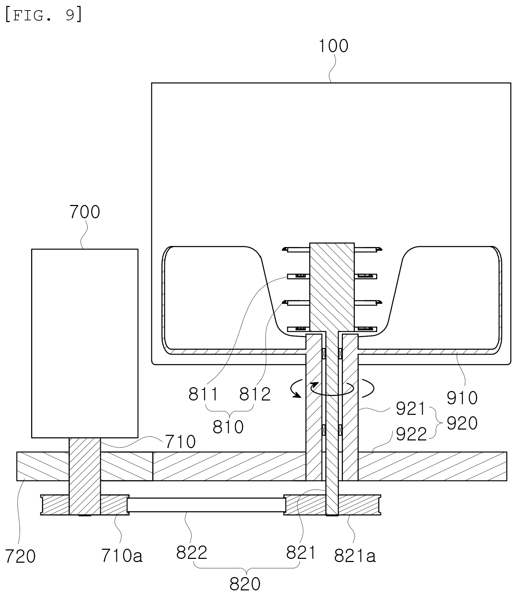

In addition, FIG. 8 is a plan view illustrating the food waste disposer of FIG. 7, and FIG. 9 is a drawing illustrating a dual-axis structure of a rotary cutter shaft and a rotary blade shaft in the food waste disposer of FIG. 7.

Referring to FIG. 8, a food waste disposer according to the sixth embodiment of the present disclosure includes a drying oven 100, a grinding cutter 810, a stirring blade 910, a driving motor 700, a cutter connection unit 820, and a blade connection unit 920.

The drying oven 100 is a receiving member into which food waste is introduced and heat treated.

Specifically, the drying oven 100 has an internal space of a certain size so that a certain amount of food waste may be accommodated.

In addition, a heater (not shown) may be installed in the drying oven 100 so that drying may be performed simultaneously during the process of grinding and stirring food waste.

Such a drying oven 100 only needs to be configured so that the heat treatment of food waste is stably performed, but a specific structure thereof is not limited by the present disclosure.

Furthermore, a pressure regulating unit 300 may be connected to the drying oven 100 via a gas flow pipe 200 to regulate internal pressure of the drying oven.

The pressure regulating unit 300 regulates the internal pressure of the drying oven 100, while preventing the gas of the drying oven 100 from being discharged outside the food treatment device. The pressure regulating unit 300 has a structure in which a size the pressure regulating space therein is varied by the inflow and outflow of the gas, thereby allowing the pressure of the drying oven 100 to be maintained within a stable range without emitting odorous gas externally. For example, the pressure regulating unit 300 may be formed of a flexible material, formed of a foldable structure, or have a cylinder structure with a built-in piston, so that the size of the pressure regulating space therein is variable.

In addition, a water tank 500 may be connected to the drying oven 100 by a gas circulation pipe 400 to collect moisture contained in the gas. The gas circulation pipe 400 may have a spiral circulation portion 410 that is cooled by a cooling unit 600 such as a cooling fan.

Meanwhile, a grinding cutter 810 and a stirring blade 910 are disposed within the drying oven 100.

The grinding cutter 810 rotates to finely grind food waste within the drying oven 100.

As described above, by the grinding cutter 810, grinding the food waste, a volume of the food waste may be reduced and the drying efficiency may be increased. Specifically, when the food waste is ground by the grinding cutter 810 into smaller particles, a total surface area thereof may be increased. In addition, heat absorption and heat transfer are accelerated in the ground small particles, allowing internal moisture in the particles to move more easily to the surface. Furthermore, the ground small, uniform particles may be dried more uniformly. Due to these reasons resulting from the grinding of food waste, the drying speed and drying quality may be improved.

The stirring blade 910 rotates to stir the food waste within the drying oven 100.

As described above, by stirring the food waste with the stirring blade 910, the food waste is evenly ground by the grinding cutter 810, thereby improving the grinding efficiency.

In addition, the drying efficiency can be increased by stirring the food waste with stirring blade 910. Specifically, by stirring the food waste with the stirring blade 910, heat is efficiently transferred from the food waste. In addition, it can uniformly disperse moisture within the food waste and promote air circulation within the food waste, thereby accelerating moisture removal. Due to the reasons resulting from the stirring of the food waste, the drying speed and drying quality may be improved.

The driving motor 700 rotates the grinding cutter 810 and the stirring blade 910, the cutter connection unit 820 connects the grinding cutter 810 and the driving motor 700, and the blade connection unit 920 connects the stirring blade 910 and the driving motor 700.

Here, the rotary cutter shaft 821 of the cutter connection unit 820 is disposed through the rotary blade shaft 921 of the blade connection unit 920, so that the rotary cutter shaft 821 and the rotary blade shaft 921 may be formed into a double-axis structure.

That is, a hollow 921a is formed in the rotary blade shaft 921, and the rotary cutter shaft 821 is disposed through the hollow 921a, so that the rotary cutter shaft 821 and the rotary blade shaft 921 have the same center of rotation, and may rotate independently of each other.

Furthermore, when the rotary cutter shaft 821 and the rotary blade shaft 921 configured as described above rotate in opposite directions, the grinding cutter 810 and the stirring blade 910 rotate in opposite directions, thereby improving the ability to grind food waste.

Specifically, as an example, the present disclosure may be configured as follows, so that the rotary cutter shaft 821 and the rotary blade shaft 921 rotate in opposite directions to each other.

The driving motor 700 rotates the grinding cutter 810 and the stirring blade 910, and in the present disclosure, one driving motor 700 mya be utilized. That is, in the present disclosure, when one driving motor 700 is operated, both the grinding cutter 810 and the stirring blade 910 may be rotated simultaneously.

The driving motor 700 may be disposed in a lateral direction of the drying oven 100 and disposed in a vertical direction.

If the driving motor 700 is disposed on a lower side of the drying oven 100, the food waste disposer of the present disclosure may have limitations in terms of placement space due to a significant long length thereof in the vertical direction. However, since the driving motor 700 is disposed in the lateral direction of the drying oven 100 and disposed in the vertical direction, in the present disclosure, the driving motor 700 may be disposed in a space with a relatively low height.

In addition, a cutter connection unit 820 connects a grinding cutter 810 and the driving motor 700.

The cutter connection unit 820 may include a rotary cutter shaft 821 connected to the grinding cutter 810, and the rotary cutter shaft 821 may be connected to the motor shaft 710 of the driving motor 700.

That is, the cutter connection unit 820 may include a rotary cutter shaft 821, an upper portion of the rotary cutter shaft 821 may be connected to a grinding cutter 810, and a lower portion of the rotary cutter shaft 821 may be connected to a motor shaft 710 of the driving motor 700.

Furthermore, the cutter connection unit 820 may further include a driving belt 822 connecting the rotary cutter shaft 821 and the motor shaft 710. For example, a motor shaft pulley 710a may be formed on the motor shaft 710, and a rotary shaft pully 821a may be formed on the rotary cutter shaft 821, and since the motor shaft pulley 710a and the rotary shaft pully 821a are connected by a driving belt 822, the rotary cutter shaft 821 may rotate by the driving belt 822 when the motor shaft 710 rotates.

As a result, when the driving motor 700 is operated, the motor shaft 710 rotates, causing the rotary cutter shaft 821 to rotate, and ultimately the grinding cutter 810 rotates.

In addition, a blade connection unit 920 connects a stirring blade 910 and the driving motor 700.

The blade connection unit 920 may include a rotary blade shaft 921 connected to the stirring blade 910, and a driven gear 922 may be formed on the rotary blade shaft 921. The driven gear 922 may be geared with the driving gear 720 formed on the motor shaft 710.

That is, the blade connection unit 920 may include a rotary blade shaft 921, an upper portion of the rotary blade shaft 921 may be connected to a stirring blade 910, and a driven gear 922 may be formed on a lower portion of the rotary blade shaft 921. The driven gear 922 may be geared with the driving gear 720 formed on the motor shaft 710, so that the driven gear 922 rotates in conjunction with the rotation of the driving gear 720.

Consequently, when the driving motor 700 is operated, the motor shaft 710 rotates, causing the driving gear 720 and the driven gear 922 to rotate, and as a result, the rotary blade shaft 921 rotates, thereby causing the stirring blade 910 to rotate.

As described above, by configuring the cutter connection unit 820 and the blade connection unit 920, when one driving motor 700 is operated, the grinding cutter 810 and the stirring blade 910 may rotate simultaneously in opposite directions.

For example, when the driving motor 700 is operated, the grinding cutter 810 may rotate at a high speed and the stirring blade 910 may rotate at a low speed. As described above, a driven gear 922 of the blade connecting unit 920 may be formed larger than the driving gear 720 of the motor shaft 710 so that the stirring blade 910 rotates at a relatively lower speed than the grinding cutter 810.

Meanwhile, the grinding cutter 810 may include a plurality of shelves 811 and a plurality of cutting members 812.

The plurality of shelves 811 may be installed on the rotary cutter shaft 821 to be spaced apart from each other in the vertical direction.

In addition, the plurality of cutting members 812 may be installed to be spaced apart from each other along the edges on each of the plurality of shelves 811.

As described above, the plurality of cutter member 812 may be disposed in a circumferential direction of the rotary cutter shaft 812, and the plurality of cutter member 812 may be disposed in a vertical direction, thereby effectively grinding food waste contained up to a certain height in the drying oven 100.

Specifically, each of the cutting member 812 and the stirring blade 910 may have a structure that is curved in a rotational direction.

The cutting member 812 may have a structure that is curved in the rotational direction, that is, a structure in which one side of the cutting member 812 located in the rotational direction is inwardly curved.

As a result, the cutting member 812 may grind food waste by cutting and tearing the food waste located in the rotational direction when rotating.

In addition, the stirring blade 910 may have a structure that is curved in the rotational direction, that is, a structure in which one side of the stirring blade 910 located in the rotational direction is inwardly curved.

As a result, when the stirring blade 910 rotates, it can stir by holding and moving the food waste located in the rotational direction of the stirring blade 910.

More specifically, the rotary cutter shaft 821 and the rotary blade shaft 921 are configured to rotate in opposite directions as described above, and the cutting member 812 and the stirring blade 910 may have a structure that is curved in opposite directions.

That is, each of the cutting member 812 and the stirring blade 910 has a structure that is curved in the rotational direction, and as the rotary cutter shaft 821 and the rotary blade shaft 921 rotate in opposite directions, the cutting member 812 and the stirring blade 910 have a structure that is curved in opposite directions.

Consequently, the food waste disposer according to the present disclosure may have a dual-axis structure of the rotary cutter shaft 821 and the rotary blade shaft 921, and by rotating the crushing cutter 810 and the stirring blade 910 in opposite directions to each other, the ability to grind food waste may be improved by a cutting member 812 that rotates in the opposite direction to the rotational direction of the stirring blade 910.

While example embodiments have been shown and described above, it will be apparent to those skilled in the art that modifications and variations could be made without departing from the scope of the present disclosure as defined by the appended claims.

### Description of Numerals

100: Drying oven 110: Heater
200: Gas flow pipe 300: Pressure regulating unit
300a: Pressure regulating space 310: Pressure regulating cylinder
320: Movable partition wall 400: Gas circulation pipe
400a: Lower portion 410: Spiral circulation portion
421: Gas inflow end 422: Gas outflow end
430: Link portion 431: First link portion
432: Second link portion 500: Water tank
600: Cooling unit 610: Condenser
620: Cooling pipe
700: Driving motor 710: Motor shaft
710a: Motor shaft pulley 720: Driving gear
810: Grinding cutter 811: Shelve
812: Cutting member 820: Cutter connection unit
821: Rotary cutter shaft 821a: Rotary shaft pulley
822: Driving belt 910: Stirring blade
920: Blade connection unit 921: Rotary blade shaft
921a: Hollow 922: Driven gear
P: Circulation fan F: Filter

## Claims

1. A food waste disposer, comprising:
a drying oven into which food waste is introduced and heat treated;
a gas flow pipe connected to the drying oven, and through which gas from the drying oven flows; and
a pressure regulating unit connected to the gas flow pipe, and having a pressure regulating space, a size of which is varied by inflow and outflow of the gas.

2. The food waste disposer of claim 1, wherein the pressure regulating unit is formed to have a foldable structure.

3. The food waste disposer of claim 1, wherein the pressure regulating unit is formed of a flexible material.

4. The food waste disposer of claim 1, wherein the pressure regulating unit comprises:
a pressure regulating cylinder, one side of which is connected to the gas flow pipe and the other side of which is open; and
a movable partition wall disposed within the pressure regulating cylinder to form the pressure regulating space between the movable partition wall and one side of the pressure regulating cylinder,
wherein, due to pressure of the gas within the pressure regulating space, the movable partition wall moves to the one side or the other side of the pressure regulating cylinder, thereby adjusting the size of the pressure regulating space.

5. The food waste disposer of claim 1, further comprising:
a gas circulation pipe connected to the drying oven, and through which gas discharged from the drying oven is circulated,
wherein the gas flow pipe is directly connected to the drying oven, or is connected to the drying oven through the gas circulation pipe.

6. The food waste disposer of claim 5, wherein the pressure regulating unit is a water tank connected to a lower portion of the gas circulation pipe.

7. The food waste disposer of claim 5, further comprising:
a water tank connected to the lower portion of the gas circulation pipe; and
a cooling unit for cooling the gas to remove moisture from the gas circulating in the gas circulation pipe.

8. The food waste disposer of claim 7, wherein the cooling unit comprises
a condenser for condensing a refrigerant; and
a cooling pipe connected to the condenser through which the refrigerant flows, and disposed to penetrate through the gas circulation pipe.

9. The food waste disposer of claim 7, wherein the gas circulation pipe has a spiral circulation portion, and
the cooling unit is a cooling fan for air cooling the spiral circulation portion.

10. The food waste disposer of claim 7, wherein the gas circulation pipe has a link portion connected to the water tank, and
the lower portion of the gas circulation pipe is formed to be inclined downwardly toward the link portion.

11. The food waste disposer of claim 7, wherein the gas circulation pipe has a first link portion connected to one side of the water tank, and a second link portion connected to the other side of the water tank.

12. The food waste disposer of claim 7, wherein the gas circulation pipe has the gas inflow end into which the gas from the drying oven is introduced, and the gas outflow end through which the gas outflows back into the drying oven, and
the gas outflow end is disposed lower than the gas inflow end within the drying oven.

13. The food waste disposer of claim 1, further comprising:
a grinding cutter and a stirring blade disposed within the drying oven;
a driving motor rotating the grinding cutter and the stirring blade;
a cutter connection unit connecting the grinding cutter and the driving motor; and
a blade connection unit connecting the stirring blade and the driving motor,
wherein a rotary cutter shaft of the cutter connection is disposed to penetrate through a rotary blade shaft of the blade connection unit, and the rotary cutter shaft and the rotary blade shaft are formed as a dual-axis structure in which the two shafts rotate independently of each other.

14. The food waste disposer of claim 13, wherein the rotary cutter shaft and the rotary blade shaft rotate in opposite directions.

15. The food waste disposer of claim 14, wherein the cutter connection unit includes the rotary cutter shaft connected to the grinding cutter, and the rotary cutter shaft is connected to a motor shaft of the driving motor, and
the blade connection unit includes the rotary blade shaft connected to the stirring blade, a driven gear is formed on the rotary blade shaft, and the driven gear is geared with a driving gear formed on the motor shaft.

16. The food waste disposer of claim 15, wherein the driven gear is formed larger than the driving gear so that the stirring blade rotates at a lower speed than the grinding cutter.

17. The food waste disposer of claim 15, wherein the driving motor is disposed in a lateral direction of the drying oven and is disposed in a vertical direction.

18. The food waste disposer of claim 17, wherein the cutter connection unit further includes a driving belt connecting the rotary cutter shaft and the motor shaft.

19. The food waste disposer of claim 13, wherein the grinding cutter includes a plurality of shelves installed to be spaced apart from each other on the rotary cutter shaft in the vertical direction; and
a plurality of cutting members installed to be spaced apart from each other along the edges on each of the plurality of shelves.

20. The food waste disposer of claim 19, wherein each of the cutting member and the stirring blade is curved in a rotational direction.

21. The food waste disposer of claim 20, wherein the rotary cutter shaft and the rotary blade shaft rotate in opposite directions, and
the cutting member and the stirring blade are curved in opposite directions.

22. A food waste processing method, comprising:
a heating operation of heat treating food waste introduced into a drying oven;
a cooling operation of cooling the food waste after the heat-treatment of the food waste is completed; and
a pressure regulating operation in which, while the heating operation and the cooling operation are being performed with the external discharge of gas blocked, a size of a pressure regulating space of a pressure regulating unit connected to the drying oven is varied by inflow of the gas into and outflow of the gas from the pressure regulating space.

23. The food waste processing method of claim 22, wherein the pressure regulating operation comprises
a first pressure regulating operation in which the size of the pressure regulating space increases when the gas is introduced from the drying oven to the pressure regulating unit during the heating operation; and
a second pressure regulating operation in which the size of the pressure regulating space decreases when the gas outflows from the pressure regulating unit to the drying oven during the cooling operation.
